# EUROPÄISCHE PATENTSCHRIFT

(11) **EP 2 658 181 B1**
(45) Veröffentlichungstag und Bekanntmachung des Hinweises auf die Patenterteilung: **21.01.2015**
(21) Anmeldenummer: 13001167.9
(22) Anmeldetag: 08.03.2013
(51) Int. Cl.: H04L 12/40, B60T 13/66, B61L 15/00

(54) **Verbindungseinrichtung zur Datenkommunikation zwischen zwei Fahrzeugen**
Connection device for data communication between two vehicles
Dispositif de liaison pour la communication de données entre deux véhicules

(30) Priorität: 27.04.2012 DE 102012008408
(43) Veröffentlichungstag der Anmeldung: 30.10.2013
(73) Patentinhaber: WABCO GmbH, 30453 Hannover (DE)
(72) Erfinder: Heise, Bernd, 30823 Garbsen (DE); Stender, Axel, 31787 Hameln (DE); Witte, Norbert, 31867 Lauenau (DE)

(56) Entgegenhaltungen:
- EP-A1- 2 060 457
- DE-A1-102010 027 283
- PARAL THOMAS: "IP network backbone with era_transceiver, 1 GBit/s communication over automatic couplers", ERA-CONTACT FIRMENPRÄSENTATION, , 6. November 2009 (2009-11-06), Seiten 1-31, XP002666073, Gefunden im Internet: URL:http://www.ukintpress-conferences.com/ conf/09rix_conf/pdfs/Day%202/12_Thomas_Par al.pdf

## Beschreibung

Die Erfindung betrifft eine Verbindungseinrichtung zur Datenkommunikation zwischen zwei Fahrzeugen gemäß dem Oberbegriff des Anspruchs 1. Daneben betrifft die Erfindung ein Fahrzeug mit einer derartigen Verbindungseinrichtung.

Elektronische Steuergeräte in Straßenfahrzeugen sind üblicherweise durch einen CAN-Bus mit Sensoren und Aktuatoren verbunden. Eine wichtige Anwendung ist die elektronische Steuerung von Bremsen, insbesondere im Zusammenhang mit einem Antiblockiersystem (ABS/EBS). In Nutzfahrzeugen mit pneumatischen Bremsen und ABS ist ein zur Pneumatik paralleles elektronisches Bremssystem üblich. Über den CAN-Bus werden u.a. die für die Ansteuerung der Bremsen benötigten Sensordaten einerseits und Steuerbefehle andererseits übertragen.

Ein Sonderfall ist die Kopplung zweier Fahrzeuge miteinander, insbesondere von Zugfahrzeug und Anhängerfahrzeug, beispielsweise die Kopplung einer Sattelzugmaschine mit einem Sattelauflieger. Die Fahrzeuge müssen über den CAN-Bus miteinander verbunden sein, um so die Funktionalität des elektronischen Bremssystems für beide Fahrzeuge gemeinsam bzw. für den Verbund beider Fahrzeuge nutzen zu können. In der Norm ISO 7638 ist eine Steckverbindung zwischen zwei Fahrzeugen als Hardware für den CAN-Bus und für die elektrische Spannungsversorgung im Übrigen definiert. Bestandteil der Steckverbindung ist auf beiden Seiten ein Wendelkabel (Helix-Kabel), welches die Relativbewegungen zwischen Anhängerfahrzeug und Zugfahrzeug ausgleichen soll. Nach dem Ankoppeln des Anhängerfahrzeugs an das Zugfahrzeug müssen die Wendelkabel manuell miteinander verbunden bzw. gesteckt werden.

In der Entwicklung und bereits im Einsatz sind automatische Kupplungssysteme, die auch die elektrische Verbindung über die manuell zu verbindenden Wendelkabel mit Steckverbindung gemäß ISO 7638 ablösen sollen, insbesondere für die Kopplung von Sattelzugmaschine und Sattelauflieger. Derartige automatische Kupplungssysteme oder Verbindungen werden auch als Fully Automatic Coupling Systems (FACS), Automated Coupling Systems (ACS) oder Automated Connections between Vehicles (ACV) bezeichnet. Einschlägige Normen sind beispielsweise ISO 13044 und ECE R13. Mit dem automatischen Kupplungssystem soll es möglich sein beim Ankoppeln des Anhängerfahrzeugs an das Zugfahrzeug zugleich automatisch und ohne Eingriff von Personal elektrische und pneumatische Verbindungen zwischen Zugfahrzeug und Anhängerfahrzeug herzustellen, natürlich auch bezüglich der Datenübertragung.

Die Steckverbindung gemäß ISO 7638 ist international verbreitet. Eine Ablösung oder Ergänzung durch automatische Kupplungssysteme erfordert sinnvollerweise eine Übergangszeit, in der sowohl eine Steckverbindung gemäß ISO 7638 als auch ein automatisches Kupplungssystem zur Verfügung stehen. Eine Zeit lang werden deshalb neue Zugfahrzeuge und Anhängerfahrzeuge beide Systeme nebeneinander aufweisen, um so alte Fahrzeuge, welche nur über die Steckverbindung gemäß ISO 7638 verfügen, weiterhin nutzen zu können.

Sofern beide Fahrzeuge über beide Systeme verfügen, wird durch die Funktion des automatischen Kupplungssystems über dieses automatisch die CAN-Bus-Verbindung zwischen den Fahrzeugen hergestellt.

Wird in diesem Fall die Steckverbindung nach ISO 7638 zusätzlich zum automatischen Kupplungssystem geschlossen, ist die in der ISO 11992 geforderte Punkt-zu-Punkt-Verbindung aufgrund der dann aktiven parallelen Systeme nicht mehr gegeben. Außerdem können zu große Kapazitäten wegen der zusätzlichen Steckverbindungen und Kapazitätsbeläge der Leitungen auftreten, die zu Störungen der Datenkommunikation führen können. Diese können die Stabilität der Datenverbindung beeinträchtigen oder sogar eine Datenverbindung verhindern. Um die Nachteile zu vermeiden, müsste das Personal bei aktiver Verbindung über das automatische Kupplungssystem die Steckverbindung gemäß ISO 7638 bewusst nicht stecken. Bleibt jedoch die Steckverbindung nach ISO 7638 offen, ist diese CAN-Bus-Verbindung nicht abgeschlossen. Es können Leitungsreflektionen auftreten, die den sicheren Betrieb der CAN-Kommunikation gefährden.

Ähnliches gilt für den Fall, dass nur eines der Fahrzeuge ein automatisches Kupplungssystem aufweist und eine Verbindung zwischen zwei Fahrzeugen nur über die Steckverbindung nach ISO 7638 hergestellt wird. An dem Fahrzeug mit dem automatischen Kupplungssystem bleibt dann die zugehörige Steckdose offen mit den zuvor beschriebenen Nachteilen.

Sofern das Bedienungspersonal angewiesen ist, bei vorhandenem automatischem Kupplungssystem die Steckverbindung nach ISO 7638 nicht zu stecken, besteht die Gefahr, dass die Verbindung gemäß ISO 7638 auch dann nicht gesteckt wird, wenn keine Verbindung über das automatische Kupplungssystem vorliegt. Einfacher und sicherer ist deshalb ein Ablauf beim Ankoppeln von Fahrzeugen, der vorsieht, dass die Verbindung gemäß ISO 7638 stets gesteckt wird, unabhängig von den gegebenenfalls vorhandenen automatischen Kupplungssystemen. Wenn in einem derartigen Fall die automatischen Kupplungssysteme bei beiden Fahrzeugen vorhanden sind, treten aber die zuvor genannten Nachteile auf.

DE 10 2010 027 283 A1 offenbart ein Verkehrsmittel, das aus lösbar miteinander verbundenen Fahrzeugen besteht und eine Datenübertragungsvorrichtung zur kabelgebundenen Datenübertragung zwischen den Fahrzeugen und innerhalb der Fahrzeuge aufweist. Die Datenübertragungsvorrichtung umfasst in jedem Fahrzeug Datenkopplungseinheiten zur Datenübertragung zwischen dem jeweiligen Fahrzeug und mit ihm verbundenen Fahrzeugen sowie zwei voneinander getrennte, seine beiden Datenkopplungseinheiten verbindenden Datenverbindungen. Dabei weist jede Datenkopplungseinheit vier Datenports sowie eine oder mehrere Switcheinheiten auf, mittels derer verschiedene elektrische Verbindungszustände der Datenports herstellbar sind. Die Erfindung betrifft ferner ein Verfahren zur Datenübertragung in einem derartigen Verkehrsmittel.

EP 2 060 458 A1 offenbart ein Bremssteuermodul für einen Erstanhänger eines Lastkraftwagens, mit einer Zugfahrzeug-Schnittstelle, die eine Zugfahrzeug-CAN-Schnittstelle zum Verbinden mit einem Zugfahrzeug-CAN-Anschluss eines Zugfahrzeugs, eine Zugfahrzeug-Spannungsversorgungs-Schnittstelle zum Verbinden mit einem Zugfahrzeug-Spannungsversorgungs-Anschluss des Zugfahrzeugs und eine Zugfahrzeug-Warnlampen-Schnittstelle zum Verbinden mit einem Zugfahrzeug-Warnlampen-Anschluss des Zugfahrzeugs umfasst, und einer Zweitanhänger-Schnittstelle zum Anschließen eines Zweitanhängers, der an dem Erstanhänger angekoppelt ist, die eine Zweitanhänger-CAN-Schnittstelle zum Verbinden mit einem Zweitanhänger-CAN-Anschluss des Zweitanhängers, eine Zweitanhänger-Spannungsversorgungs-Schnittstelle zum Verbinden mit einem Spannungs-Anschluss des Zweitanhängers und eine Zweitanhänger-Warnlampen-Schnittstelle zum Verbinden mit einem Zweitanhänger-Warnlampen-Anschluss des Zweitanhängers umfasst.

Aufgabe der vorliegenden Erfindung ist die Schaffung einer sicheren CAN-Verbindung zwischen zwei Fahrzeugen, etwa zwischen Zugfahrzeug und Anhängerfahrzeug. Insbesondere sollen die im Mischbetrieb möglichen Nachteile vermieden werden.

Zur Lösung der Aufgabe weist die erfindungsgemäße Verbindungseinrichtung die Merkmale des Anspruchs 1 auf. Zwischen der Datenleitung und den Steckverbindungen - insbesondere Verbindung nach ISO 7638 einerseits und Verbindung des automatischen Kupplungssystems andererseits - ist ein Datensplitter vorgesehen. Der Datensplitter prüft, welche Steckverbindung gesteckt ist, d.h. welche Steckverbindung an eine korrespondierende Steckverbindung eines anderen Fahrzeugs angeschlossen ist, und aktiviert den zugehörigen Leitungspfad.

Falls beide Steckverbindungen gesteckt sind, wird nur einer der Leitungspfade aktiviert. Dadurch ist sichergestellt, dass die in der ISO 11992 geforderte Punkt-zu-Punkt-Verbindung besteht, nämlich ohne Parallelverbindung. Der jeweils andere Leitungspfad ist nicht aktiviert. Die Datenverbindung endet am Splitter. Dadurch werden zu große Kapazitäten vermieden. Außerdem stellt jeder Datensplitter einen Abschlusswiderstand für den CAN-Bus des nicht aktivierten Leitungspfades bereit. Eine "offene Steckdose" wird so sicher vermieden.

Grundsätzlich hat der Datensplitter die Aufgabe zwei parallele Leitungspfade bereitzustellen, insbesondere für die Steckverbindung nach ISO 7638 und ein vollautomatisches Kupplungssystem (FACS, ACS, ACV). Zusätzlich prüft der Datensplitter, welche Leitungspfade durch miteinander verbundene Stecker physikalisch realisiert sind. Falls mehr als ein Leitungspfad physikalisch vorhanden ist, wird nur einer davon aktiviert.

Wie bereits angegeben, soll eine der Steckverbindungen vorzugsweise gemäß ISO 7638 ausgeführt sein. Es kann sich aber auch um eine andere ähnliche Steckverbindung handeln, über die Daten und Ströme übertragen werden.

Bei der anderen Steckverbindung handelt es sich vorzugsweise um ein vollautomatisches Kupplungssystem entsprechend ISO 13044. Auch hier ist die Verwendung anderer Systeme nach anderen Normen möglich.

Vorteilhafterweise aktiviert der Datensplitter bevorzugt den zum vollautomatischen Kupplungssystem gehörenden Leitungspfad. Möglich ist aber auch eine Priorisierung des zur anderen Steckverbindung gehörenden Leitungspfades.

Erfindungsgemäß kann der Datensplitter nach Art eines CAN-Routers aufgebaut sein. So kann der WABCO CAN-Router der WABCO Fahrzeugsysteme GmbH durch Anpassung der Software und der Stecker die Funktionen des Datensplitters erfüllen. An einen Steckerausgang des Datensplitters wird beispielsweise das Wendelkabel für die Verbindung nach ISO 7638 angeschlossen, an einen anderen Steckerausgang das zum vollautomatischen Kupplungssystem führende Kabel und an einen dritten Steckerausgang das fahrzeugseitige Kabel für den CAN-Bus.

Vorteilhafterweise aktiviert oder deaktiviert der Datensplitter nicht nur den jeweiligen Leitungspfad, sondern auch weitere zur jeweiligen Verbindung gehörende elektrische Leitungen.

Gegenstand der Erfindung ist auch ein Fahrzeug mit einer Verbindungseinrichtung entsprechend den voranstehenden Ausführungen. Insbesondere handelt es sich um ein Zugfahrzeug oder ein Anhängerfahrzeug, vorzugsweise um einen Sattelschlepper oder Sattelauflieger.

Schließlich ist Gegenstand der Erfindung auch ein Verfahren zum Einrichten oder zum Betrieb einer Verbindung für die Datenkommunikation zwischen zwei Fahrzeugen, insbesondere zwischen Zugfahrzeug und Anhängefahrzeug, mit je einer Datenleitung an jedem Fahrzeug, insbesondere zur Übertragung von Daten für ein elektronisches Bremssystem (EBS) von Fahrzeug zu Fahrzeug und vorzugsweise über einen CAN-Bus oder ein anderes Bus-System, wobei zwei Steckverbindungen vorgesehen sind, welche parallel zueinander an die Datenleitungen angeschlossen sein können und welche je einen Leitungspfad für die Verbindung von Fahrzeug zu Fahrzeug schließen. Erfindungsgemäß ist vorgesehen, dass beim Zusammenkoppeln der Fahrzeuge beide Steckverbindungen geschlossen werden, und dass die Datenkommunikation nur über eine der Steckverbindungen geführt wird.

Vorteilhafterweise wird die Datenkommunikation bevorzugt über eine bestimmte Steckverbindung geführt, wobei bei Ausfall der bestimmten Steckverbindung die Datenkommunikation über die jeweils andere Steckverbindung geführt wird.

Vorzugsweise handelt es sich bei der bevorzugten Steckverbindung über eine zu einem vollautomatischen Kupplungssystem gehörende Verbindung. Sofern die Datenkommunikation über diese Verbindung fehlerhaft ist oder ausfällt, wird die Datenkommunikation über die andere Steckverbindung geführt, etwa über Wendelkabel nach ISO 7638.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher beschrieben. Es zeigen:
- Fig. 1: Eine Prinzipskizze mit Verbindungseinrichtungen für die Datenkommunikation zwischen zwei Fahrzeugen,
- Fig. 2: Sattelschlepper und Sattelauflieger, jeweils mit nur einer Steckverbindung nach ISO 7638 (beidseitig nur ein System),
- Fig. 3: Sattelschlepper und Sattelauflieger mit einer Steckverbindung nach ISO 7638 und zusätzlich mit einem automatischen Kupplungssystem ACS am Sattelauflieger (nur einseitig zwei Systeme),
- Fig. 4: Sattelzugmaschine und Sattelauflieger mit einer Steckverbindung nach ISO 7638 und je einem automatischen Kupplungssystem ACS an beiden Fahrzeugen (beidseitig zwei Systeme),
- Fig. 5: Sattelzugmaschine und Sattelauflieger mit Steckverbindung nach ISO 7638 und mit automatischem Kupplungssystem ACS an der Sattelzugmaschine (nur einseitig zwei Systeme).

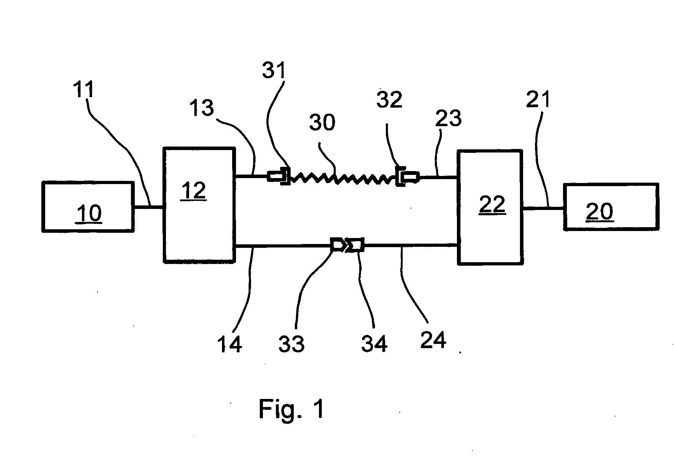

Figur 1 zeigt in der linken Hälfte eine elektronische Steuereinheit 10 mit einem CAN-Bus als Datenleitung 11. Die elektronische Steuereinheit kommuniziert mit Sensoren und Aktuatoren eines elektronischen Bremssystems EBS in Verbindung mit einem Antiblockiersystem ABS (nicht gezeigt).

Die Datenleitung 11 ist mit einem Splitter 12 verbunden. Dieser ist darüber hinaus an zwei Verbindungssysteme für den CAN-Bus angeschlossen, nämlich das Verbindungssystem 13 nach ISO 7638 und dazu parallel das Verbindungssystem 14 entsprechend einer Spezifikation für ein vollautomatisches Kupplungssystem ACS.

Analog den voranstehenden Ausführungen sind in der rechten Hälfte der Figur 1 eine elektronische Steuereinheit 20, ein CAN-Bus mit einer Datenleitung 21, ein Splitter 22, ein Verbindungssystem 23 nach ISO 7638 und ein dazu paralleles Verbindungssystem 24 für ein automatisches Kupplungssystem ACS dargestellt.

Eine Verbindungseinrichtung zur Datenkommunikation im Sinne der Erfindung umfasst vorzugsweise einen der Splitter 12, 22 als Verbindungseinrichtung im engeren Sinne oder einen der Splitter 12, 22 mit Datenleitung 11, 21, Verbindungssystem 13, 23 und Verbindungssystem 14, 24 als Verbindungseinrichtung im weiteren Sinne.

Zwischen den Verbindungssystemen 13 und 23 ist ein Wendelkabel 30 mit beidseitigen Steckern 31, 32 ersichtlich. Die Verbindungssysteme 14, 24 sind über eine automatische Kupplung mit den Kupplungsteilen 33, 34 miteinander verbunden.

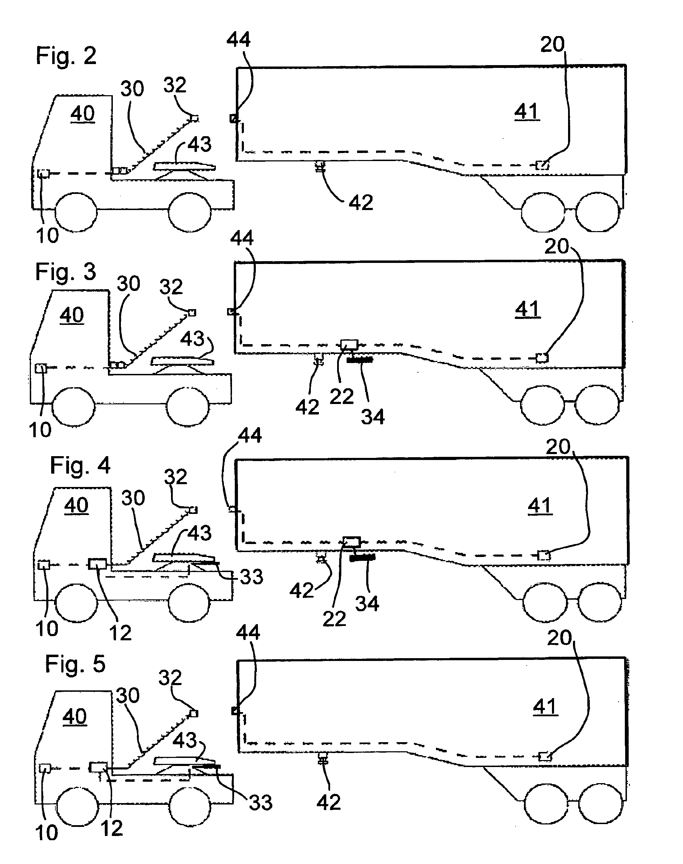

Die Teile mit den Ziffern 10 bis 14 und 33 sind vorzugsweise einer Sattelzugmaschine 40 zugeordnet, die Teile 20 bis 24 und 34 einem Sattelauflieger 41, siehe Figuren 2 bis 5.

Figur 2 zeigt ein herkömmliches System ohne Splitter, nämlich eine Sattelzugmaschine 40 und einen Sattelauflieger 41 nur mit einer Steckverbindung nach ISO 7638 und ohne ein automatisches Kupplungssystem.

Die Darstellung gemäß Figur 1 entspricht im Wesentlichen der Darstellung gemäß Figur 4, nämlich mit zwei zueinander parallelen Steckverbindungssystemen bzw. einer Verbindung nach ISO 7638 und einer anderen Verbindung über ein automatisches Kupplungssystem ACS. Beim Zusammenkoppeln von Sattelzugmaschine 40 und Sattelauflieger 41 kommt ein Zapfen 42 im Sattel 43 zu liegen. Zugleich rasten die Kupplungsteile 33, 34 miteinander ein. Zusätzlich wird der Stecker 32 manuell in einen korrespondierenden Stecker 44 am Sattelauflieger 41 eingesteckt. Somit sind bei angekoppeltem Sattelauflieger 41 zwei Steckverbindungen geschlossen.

Gemäß Figur 3 ist die Sattelzugmaschine 40 nur mit einem System für die Steckverbindung nach ISO 7638 ausgestattet, während der Sattelauflieger 41 zusätzlich die Funktionalität eines automatischen Kupplungssystems mit dem Kupplungsteil 34 aufweist. Bei angekoppeltem Sattelauflieger 41wird hier nur eine Steckverbindung geschlossen.

Schließlich zeigt Figur 5 die Sattelzugmaschine 40 mit der Steckverbindung nach ISO 7638 und der Funktionalität für das automatische Kupplungssystem mit dem Kupplungsteil 33, während der Sattelauflieger 41 nur die Steckverbindung nach ISO 7638 aufweist. Auch hier ist bei angekoppeltem Sattelauflieger 41 nur die Steckverbindung nach ISO 7638 geschlossen.

Ohne zusätzliche Maßnahmen sind die in den Figuren 3, 4 und 5 gezeigten Varianten mit Nachteilen behaftet. In den Figuren 3 und 5 bleibt jeweils eine Verbindung offen, so dass für den CAN-Bus kein sauberer Abschluss vorhanden ist. In der Variante der Figur 4 sind zwei parallele Verbindungen gesteckt, so dass die in der Norm geforderte Punkt-zu-Punkt-Verbindung nicht besteht.

Zur Behebung der Nachteile sind die Splitter 12, 22 vorgesehen. Diese weisen folgende Funktionalitäten auf:
Der Splitter 12, 22 prüft, welche Steckverbindungen geschlossen sind. Falls nur eine geschlossen ist, wird auch nur ein über diese Steckverbindung laufender Leitungspfad vom Splitter 11, 22 aktiviert. Zugleich stellt jeder Splitter 12, 22 einen Abschluss für den CAN-Bus der nicht geschlossenen Steckverbindung bzw. des nicht aktivierten Leitungspfades dar. Als Leitungspfad wird hier eine über den Splitter führende Datenverbindung verstanden. Zusätzlich kann eine Spannungsversorgung Bestandteil des Leitungspfades sein.

Sofern beide Steckverbindungen über die Verbindungssysteme 13, 14 und 23, 24 geschlossen sind, wird nur ein Leitungspfad aktiviert, vorzugsweise der zum automatischen Kupplungssystem gehörende Leitungspfad mit den Verbindungssystemen 14, 24. Der Leitungspfad der anderen Steckverbindung bleibt deaktiv, so dass eine eindeutige Punkt-zu-Punkt-Verbindung besteht.

Bei Ausfall des aktivierten Leitungspfades kann der parallele aber bislang deaktive Leitungspfad aktiviert werden. Entsprechend prüfen die Splitter 12, 22 die Kommunikation über die Leitungspfade.

### Bezugszeichenliste:

- 10: elektronische Steuereinheit
- 11: Datenleitung
- 12: Splitter
- 13: Verbindungssystem
- 14: Verbindungssystem
- 20: elektronische Steuereinheit
- 21: Datenleitung
- 22: Splitter
- 23: Verbindungssystem
- 24: Verbindungssystem
- 30: Wendelkabel
- 31: Stecker ISO 7638
- 32: Stecker ISO 7638
- 33: Kupplungsteil
- 34: Kupplungsteil
- 40: Sattelzugmaschine
- 41: Sattelauflieger
- 42: Zapfen
- 43: Sattel
- 44: Stecker ISO 7638

## Patentansprüche

1. Verbindungseinrichtung zur Datenkommunikation zwischen zwei Fahrzeugen, insbesondere zwischen Zugfahrzeug und Anhängerfahrzeug, mit einer Datenleitung (11, 21), insbesondere zur Übertragung von Daten für ein elektronisches Bremssystem, EBS, und vorzugsweise über einen CAN-Bus oder ein anderes Bus-System, wobei zwei Steckverbindungen vorgesehen sind, welche beide an die Datenleitung (11, 21) angeschlossen sind und welche verschiedenen Leitungspfaden zugeordnet sind, **gekennzeichnet durch** folgende Merkmale:
a) zwischen der Datenleitung (11, 21) und den Steckverbindungen ist ein Datensplitter (12, 22) vorgesehen,
b) der Datensplitter (12, 22) ist ausgelegt zu prüfen, welche Steckverbindung gesteckt ist, das heißt an eine korrespondierende Steckverbindung angeschlossen ist, und ausgelegt den zugehörigen Leitungspfad zu aktivieren,
c) falls beide Steckverbindungen gesteckt sind, ausgelegt nur einer der Leitungspfade zu aktivieren.

2. Verbindungseinrichtung nach Anspruch 1, **dadurch gekennzeichnet, dass** eine der Steckverbindungen nach ISO 7638 ausgeführt ist.

3. Verbindungseinrichtung nach Anspruch 1 oder 2, **dadurch gekennzeichnet, dass** eine der Steckverbindungen nach der Spezifikation eines vollautomatischen Kupplungssystems, FACS, ACS, ACV, ausgeführt ist.

4. Verbindungseinrichtung nach Anspruch 3, **dadurch gekennzeichnet, dass** der zum vollautomatischen Kupplungssystem gehörende Leitungspfad bevorzugt aktiviert wird.

5. Verbindungseinrichtung nach Anspruch 2, **dadurch gekennzeichnet, dass** der zur ISO 7638 gehörende Leitungspfad bevorzugt aktiviert wird.

6. Verbindungseinrichtung nach Anspruch 1 oder einem der weiteren Ansprüche, **dadurch gekennzeichnet, dass** der Datensplitter (12, 22) nach Art eines CAN-Routers aufgebaut ist, insbesondere mit abgewandelter Software.

7. Fahrzeug mit einer Verbindungseinrichtung nach einem der voranstehenden Ansprüche, insbesondere ein Zugfahrzeug (40) oder ein Anhängerfahrzeug (41).

8. Verfahren zum Einrichten oder zum Betrieb einer Verbindung für die Datenkommunikation zwischen zwei Fahrzeugen, insbesondere zwischen Zugfahrzeug (40) und Anhängerfahrzeug (41), mit je einer Datenleitung (11, 21) an jedem Fahrzeug, insbesondere zur Übertragung von Daten für ein elektronisches Bremssystem, EBS, von Fahrzeug zu Fahrzeug und vorzugsweise über einen CAN-Bus oder ein anderes Bus-System, wobei zwei Steckverbindungen vorgesehen sind, welche parallel zueinander an die Datenleitungen (11, 21) angeschlossen sind und welche verschiedenen Leitungspfaden für die Verbindung von Fahrzeug zu Fahrzeug zugeordnet sind, **gekennzeichnet durch** folgende Merkmale:

9. Verfahren nach Anspruch 8, **dadurch gekennzeichnet, dass** die Datenkommunikation bevorzugt über eine bestimmte der Steckverbindungen geführt wird, und dass bei Ausfall der bestimmten Steckverbindung die Datenkommunikation über die jeweils andere Steckverbindung geführt wird.
a) zwischen der Datenleitung (11, 21) und den Steckverbindungen ist ein Datensplitter (12, 22) vorgesehen,
b) der Datensplitter (12, 22) prüft, welche Steckverbindung gesteckt ist, das heißt an eine korrespondierende Steckverbindung angeschlossen ist, und aktiviert den zugehörigen Leitungspfad,
c) falls beide Steckverbindungen gesteckt sind, wird nur einer der Leitungspfade aktiviert.

## Claims

1. Connecting device for data communication between two vehicles, particularly between towing vehicle and trailer vehicle, having a data line (11, 21), particularly for transmitting data for an electronic braking system, EBS, and preferably via a CAN bus or another bus system, wherein two plug connections are provided that are both connected to the data line (11, 21) and that are associated with different line paths, **characterized by** the following features:
a) a data splitter (12, 22) is provided between the data line (11, 21) and the plug connections,
b) the data splitter (12, 22) is designed to check which plug connection is plugged in, that is to say is connected to a corresponding plug connection, and designed to activate the associated line path,
c) if both plug connections are plugged in, designed to activate only one of the line paths.

2. Connecting device according to Claim 1, **characterized in that** one of the plug connections is embodied according to ISO 7638.

3. Connecting device according to Claim 1 or 2, **characterized in that** one of the plug connections is embodied according to the specification of a fully automatic coupling system, FACS, ACS, ACV.

4. Connecting device according to Claim 3, **characterized in that** the line path associated with the fully automatic coupling system is activated preferably.

5. Connecting device according to Claim 2, **characterized in that** the line path associated with ISO 7638 is activated preferably.

6. Connecting device according to Claim 1 or one of the further claims, **characterized in that** the data splitter (12, 22) is designed in the manner of a CAN router, particularly with modified software.

7. Vehicle having a connecting device according to one of the preceding claims, particularly a towing vehicle (40) or a trailer vehicle (41).

8. Method for setting up or for operating a connection for the data communication between two vehicles, particularly between towing vehicle (40) and trailer vehicle (41), having a respective data line (11, 21) on each vehicle, particularly for transmitting data for an electronic braking system, EBS, from vehicle to vehicle and preferably via a CAN bus or another bus system, wherein two plug connections are provided that are connected in parallel with one another to the data lines (11, 21) and that are associated with different line paths for the connection from vehicle to vehicle, **characterized by** the following features:
a) a data splitter (12, 22) is provided between the data line (11, 21) and the plug connections,
b) the data splitter (12, 22) checks which plug connection is plugged in, that is to say is connected to a corresponding plug connection, and activates the associated line path,
c) if both plug connections are plugged in, only one of the line paths is activated.

9. Method according to Claim 8, **characterized in that** the data communication is preferably routed via a particular one of the plug connections, and **in that** if the particular plug connection fails then the data communication is routed via the other plug connection.

## Revendications

1. Dispositif de liaison destiné à la communication de données entre deux véhicules, notamment entre un véhicule tracteur et un véhicule tracté, comprenant une ligne de données (11, 21), notamment destinée à la transmission de données pour un système de freinage électronique, EBS, et de préférence par l'intermédiaire d'un bus CAN ou d'un autre système de bus, dans lequel il est prévu deux connecteurs qui sont tous deux connectés à la ligne de données (11, 21) et qui sont associés à des trajets de conduction différents, **caractérisé par** les caractéristiques suivantes :
a) entre la ligne de données (11, 21) et les connecteurs, il est prévu un séparateur de données (12, 22),
b) le séparateur de données (12, 22) est conçu pour vérifier quel connecteur est connecté, c'est-à-dire est connecté à un connecteur correspondant, et est conçu pour activer le trajet de conduction correspondant,
c) dans le cas où les deux connecteurs sont connectés, il est conçu pour n'activer que l'un des trajets de conduction.

2. Dispositif de liaison selon la revendication 1, **caractérisé en ce que** l'un des connecteurs est réalisé conformément à la norme ISO 7638.

3. Dispositif de liaison selon la revendication 1 ou 2, **caractérisé en ce que** l'un des connecteurs est réalisé conformément à la spécification d'un système de couplage entièrement automatique, FACS, ACS, ACV.

4. Dispositif de liaison selon la revendication 3, **caractérisé en ce que** le trajet de conduction associé au système de couplage entièrement automatique est de préférence activé.

5. Dispositif de liaison selon la revendication 2, **caractérisé en ce que** le trajet de conduction de type ISO 7638 est de préférence activé.

6. Dispositif de liaison selon la revendication 1 ou l'une quelconque des autres revendications, **caractérisé en ce que** le séparateur de données (12, 22) est constitué sous la forme d'un routeur CAN, notamment au moyen d'un logiciel modifié.

7. Véhicule comportant un dispositif de liaison selon l'une quelconque des revendications précédentes, notamment un véhicule tracteur (40) ou un véhicule tracté (41).

8. Procédé de mise en oeuvre ou de mise en fonctionnement d'une liaison destinée à la communication de données entre deux véhicules, notamment entre un véhicule tracteur (40) et un véhicule tracté (41), comprenant chacun une ligne de données (11, 21) sur chaque véhicule, notamment destinée à la transmission de données pour un système de freinage électronique, EBS, de véhicule à véhicule, et de préférence par l'intermédiaire d'un bus CAN ou d'un autre système de bus, dans lequel il est prévu deux connecteurs qui sont raccordés parallèlement l'un à l'autre aux lignes de données (11, 21) et qui sont associés à des trajets de conduction différents pour la liaison de véhicule à véhicule, **caractérisé par** les caractéristiques suivantes :
a) entre la ligne de données (11, 21) et les connecteurs, il est prévu un séparateur de données (12, 22),
b) le séparateur de données (12, 22) est conçu pour vérifier quel connecteur est connecté, c'est-à-dire est connecté à un connecteur correspondant, et active le trajet de conduction correspondant,
c) dans le cas où les deux connecteurs sont connectés, seul l'un des trajets de conduction est activé.

9. Procédé selon la revendication 8, **caractérisé en ce que** la communication de données est de préférence guidée par le biais d'un connecteur déterminé parmi les connecteurs, et **en ce qu'**en cas de panne du connecteur déterminé, la communication de données est guidée par le biais de l'autre connecteur respectif.
